(19) Europäisches Patentamt
European Patent Office
Office européen des brevets

(11) **EP 4 633 113 A1**

(12) **EUROPEAN PATENT APPLICATION**
published in accordance with Art. 153(4) EPC

(43) Date of publication:
**15.10.2025 Bulletin 2025/42**

(21) Application number: **24787759.0**

(22) Date of filing: **16.01.2024**

(51) International Patent Classification (IPC):
*H04L 67/1095* *(2022.01)*

(52) Cooperative Patent Classification (CPC):
**G06F 16/23; G06F 16/27; H04L 67/1095;
H04L 67/141; H04L 67/55; H04L 67/566**

(86) International application number:
**PCT/CN2024/072619**

(87) International publication number:
**WO 2024/212652 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.04.2023 CN 202310455593**

(71) Applicant: **Huawei Technologies Co., Ltd.
Shenzhen, Guangdong 518129 (CN)**

(72) Inventors:
• **XU, Chao
Shenzhen, Guangdong 518129 (CN)**
• **LI, Youfu
Shenzhen, Guangdong 518129 (CN)**
• **GONG, Ashi
Shenzhen, Guangdong 518129 (CN)**
• **LIU, Fang
Changsha, Hunan 410082 (CN)**

(74) Representative: **Gill Jennings & Every LLP
The Broadgate Tower
20 Primrose Street
London EC2A 2ES (GB)**

(54) **DATA SYNCHRONIZATION METHOD, ELECTRONIC DEVICE, AND SYSTEM**

(57) This application provides a data synchronization method and system, and an electronic device, and relates to the field of terminal technologies. **In** this application, the electronic device maintains a watermark indication matrix for recording watermark change statuses of data of a plurality of data types, and the electronic device indicates, by using the watermark indication matrix, a peer device to synchronize data watermarks, thereby effectively reducing power consumption of data synchronization. The method includes: After determining that a first application generates data of a first data type, a first electronic device determines a second electronic device corresponding to the first application; and records, in a watermark indication matrix corresponding to the second electronic device, that a watermark of the data of the first data type of the first application has changed. The first application is installed on the second electronic device, and the watermark indication matrix is used to record watermark change statuses of data of a plurality of data types. The first electronic device sends watermark information to the second electronic device, where the watermark information indicates the second electronic device to perform data synchronization based on a watermark change status recorded in the watermark indication matrix.

FIG. 7

## Description

This application claims priority to Chinese Patent Application No. 202310455593.X, filed with the China National Intellectual Property Administration on April 14, 2023 and entitled "DATA SYNCHRONIZATION METHOD AND SYSTEM, AND ELECTRONIC DEVICE", which is incorporated herein by reference in its entirety.

## TECHNICAL FIELD

Embodiments of this application relate to the field of terminal technologies, and in particular, to a data synchronization method and system, and an electronic device.

## BACKGROUND

With development of terminal technologies, electronic devices can establish connections to a plurality of types of other electronic devices, to form a distributed communication system. In the distributed communication system, an electronic device can implement data synchronization with other devices in a data pull manner, to ensure data consistency between a plurality of electronic devices.

In a data pull process, the electronic device needs to wake up peer devices in an undifferentiated manner, and pull latest data from all the peer devices to the electronic device. However, in this process, if the peer device does not have a data change, this wake-up of the peer device is invalid wake-up, causing unnecessary power consumption.

## SUMMARY

To resolve the foregoing technical problem, this application provides a data synchronization method and system, and an electronic device. According to technical solutions provided in this application, a first electronic device maintains a watermark indication matrix for recording watermark change statuses of data of a plurality of data types, and the first electronic device sends watermark information to a second electronic device based on the watermark indication matrix, to synchronize data watermarks, thereby effectively reducing power consumption of data synchronization.

To achieve the foregoing technical objective, this application provides the following technical solutions.

According to a first aspect, a data synchronization method is provided, and is applied to a first electronic device. The method includes: determining, after determining that a first application generates data of a first data type, a second electronic device corresponding to the first application, where the first application is installed on the second electronic device; recording, in a watermark indication matrix corresponding to the second electronic device, that a watermark of the data of the first data type of the first application has changed, where the watermark indication matrix is used to record watermark change statuses of data of a plurality of data types; and sending watermark information to the second electronic device, where the watermark information indicates the second electronic device to perform data synchronization based on a watermark change status recorded in the watermark indication matrix.

In this way, an electronic device constructs an inter-device watermark indication matrix, and when determining that data is generated, the electronic device can indicate a data update status of the electronic device to another device by using the watermark indication matrix, to synchronize watermarks of data between different devices. In this way, a peer device can subsequently perform data synchronization as required based on a watermark status, to reduce power consumption caused by unnecessary device wake-up.

In addition, the electronic device records watermark change statuses of data of different data types by using the watermark indication matrix. When the peer device cannot receive watermark information, for example, the peer device is in a sleep state, the electronic device may alternatively wait, through polling based on the watermark indication matrix, for the peer device to switch to an active state, and then send the watermark information to the peer device, to implement watermark synchronization. In this way, a watermark synchronization failure caused because the peer device cannot receive the watermark information is avoided.

According to the first aspect, before the determining, after determining that a first application generates data of a first data type, a second electronic device corresponding to the first application, the method further includes: sending a first application list to the second electronic device, where the first application list indicates application installation of the first electronic device; and receiving a second application list sent by the second electronic device, where the second application list indicates application installation of the second electronic device.

According to any one of the first aspect or the foregoing implementations of the first aspect, the method further includes: determining, based on the second application list, a target application installed on both the first electronic device and the second electronic device, where the target application includes the first application; and establishing the watermark indication matrix corresponding to the second electronic device, where the watermark indication matrix indicates a watermark change status of data of the target application.

In this way, after accessing a communication system, the first electronic device determines, by interacting with another electronic device in the communication system, an application intersection set with the another electronic device, to establish watermark indication matrices corresponding to different electronic devices, to indicate watermark change statuses of data of different data types.

According to any one of the first aspect or the foregoing implementations of the first aspect, after the sending watermark information to the second electronic device, the method further includes: clearing a watermark change status that is of the data of the first data type of the first application and that is recorded in the watermark indication matrix.

Optionally, after determining that the second electronic device and the first electronic device have completed watermark synchronization of the data of the first data type of the first application, the first electronic device may clear the watermark change status that is of the data of the first data type of the first application and that is recorded in the watermark indication matrix.

In this way, the first electronic device updates the watermark indication matrix, to determine a watermark difference between different electronic devices based on the watermark indication matrix. This meets a watermark synchronization requirement between the different electronic devices.

According to any one of the first aspect or the foregoing implementations of the first aspect, the sending watermark information to the second electronic device includes: establishing a first connection to a third electronic device in the second electronic device, and sending a data packet to the third electronic device through the first connection, where the data packet includes an application identifier field and a data type field, the application identifier field indicates the first application, and the data type field indicates the first data type.

According to any one of the first aspect or the foregoing implementations of the first aspect, the sending watermark information to the second electronic device includes: sending a broadcast packet to a fourth electronic device in the second electronic device, where the broadcast packet includes an application identifier field and a data type field, the application identifier field indicates the first application, and the data type field indicates the first data type.

In this way, the electronic device synchronizes watermarks of data as required in different manners, so that unnecessary data synchronization can be avoided. This reduces overheads.

According to a second aspect, a data synchronization method is provided, and is applied to a second electronic device. The method includes: receiving watermark information sent by a first electronic device, where the watermark information indicates that a watermark of data of a first data type of a first application on the first electronic device has changed, and the first application is installed on the second electronic device; and synchronizing the data of the first data type of the first application with the first electronic device based on the watermark information.

According to the second aspect, the synchronizing the data of the first data type of the first application with the first electronic device based on the watermark information includes: determining the first application and the first data type based on the watermark information; obtaining a synchronous addressing array corresponding to the first application, and recording, in the synchronous addressing array, that the watermark of the data of the first data type of the first electronic device has changed, where the synchronous addressing array is used to record an electronic device in which a watermark of data of the first application has changed; and when determining to consume the data of the first data type of the first application, synchronizing the data of the first data type of the first application with the first electronic device based on the synchronous addressing array.

In this way, an electronic device updates a synchronous addressing array based on watermark information sent by each device, to synchronize data watermarks. Subsequently, the electronic device may locate, based on the synchronous addressing array, a device that needs to perform data synchronization as required, to effectively reduce redundant wake-up. This reduces power consumption overheads generated in a data synchronization process, prolongs working time of the device, and can reduce communication pressure of each device node in a distributed data synchronization scenario.

According to any one of the second aspect or the foregoing implementations of the second aspect, the method further includes: updating the synchronous addressing array, where the electronic device that is recorded in an updated synchronous addressing array and in which the watermark of the data of the first data type has changed does not include the first electronic device.

In this way, the second electronic device updates the synchronous addressing array, to determine, based on the synchronous addressing array, an electronic device on which data synchronization is to be performed. This implements on-demand data pull synchronization, and effectively reduces power consumption in the data synchronization process.

According to any one of the second aspect or the foregoing implementations of the second aspect, before the receiving watermark information sent by a first electronic device, the method further includes: sending a second application list to the first electronic device, where the second application list indicates application installation of the second electronic device; and receiving a first application list sent by the first electronic device, where the first application list indicates application installation of the first electronic device.

According to any one of the second aspect or the foregoing implementations of the second aspect, before the receiving first watermark information sent by a first electronic device, the method further includes: establishing a first connection to the first electronic device; and the receiving watermark information sent by a first electronic device includes: receiving, through the first connection, a data packet sent by the first electronic device, where the data packet includes an application identifier field and a data type field, the application identifier field indicates the first application, and the data type field indicates the first data type.

According to any one of the second aspect or the foregoing implementations of the second aspect, the receiving watermark information sent by a first electronic device includes: receiving a broadcast packet sent by the first electronic device, where the broadcast packet includes an application identifier field and a data type field, the application identifier field indicates the first application, and the data type field indicates the first data type.

According to a third aspect, an electronic device is provided. The electronic device includes a processor and a memory. The memory is coupled to the processor, the memory is configured to store computer program code, and the computer program code includes computer instructions. When the processor reads the computer instructions from the memory, the electronic device is enabled to perform the following operations: determining, after determining that a first application generates data of a first data type, a second electronic device corresponding to the first application, where the first application is installed on the second electronic device; recording, in a watermark indication matrix corresponding to the second electronic device, that a watermark of the data of the first data type of the first application has changed, where the watermark indication matrix is used to record watermark change statuses of data of a plurality of data types; and sending watermark information to the second electronic device, where the watermark information indicates the second electronic device to perform data synchronization based on a watermark change status recorded in the watermark indication matrix.

According to the third aspect, the computer program code includes the computer instructions. When the processor reads the computer instructions from the memory, the electronic device is further enabled to perform the following operations: sending a first application list to the second electronic device, where the first application list indicates application installation of the first electronic device; and receiving a second application list sent by the second electronic device, where the second application list indicates application installation of the second electronic device.

According to any one of the third aspect or the foregoing implementations of the third aspect, when the processor reads the computer instructions from the memory, the electronic device is further enabled to perform the following operations: determining, based on the second application list, a target application installed on both the first electronic device and the second electronic device, where the target application includes the first application; and establishing the watermark indication matrix corresponding to the second electronic device, where the watermark indication matrix indicates a watermark change status of data of the target application.

According to any one of the third aspect or the foregoing implementations of the third aspect, when the processor reads the computer instructions from the memory, the electronic device is further enabled to perform the following operation: clearing a watermark change status that is of the data of the first data type of the first application and that is recorded in the watermark indication matrix.

According to any one of the third aspect or the foregoing implementations of the third aspect, the sending watermark information to the second electronic device includes: establishing a first connection to a third electronic device in the second electronic device, and sending a data packet to the third electronic device through the first connection, where the data packet includes an application identifier field and a data type field, the application identifier field indicates the first application, and the data type field indicates the first data type.

According to any one of the third aspect or the foregoing implementations of the third aspect, the sending watermark information to the second electronic device includes: sending a broadcast packet to a fourth electronic device in the second electronic device, where the broadcast packet includes an application identifier field and a data type field, the application identifier field indicates the first application, and the data type field indicates the first data type.

For technical effect corresponding to the third aspect and any one of the implementations of the third aspect, refer to the technical effect corresponding to the third aspect and any one of the implementations of the third aspect. Details are not described herein again.

According to a fourth aspect, the electronic device includes a processor and a memory. The memory is coupled to the processor, the memory is configured to store computer program code, and the computer program code includes computer instructions. When the processor reads the computer instructions from the memory, the electronic device is enabled to perform the following operations: receiving watermark information sent by a first electronic device, where the watermark information indicates that a watermark of data of a first data type of a first application on the first electronic device has changed, and the first application is installed on the second electronic device; and synchronizing the data of the first data type of the first application with the first electronic device based on the watermark information.

According to the fourth aspect, the synchronizing the data of the first data type of the first application with the first electronic device based on the watermark information includes: determining the first application and the first data type based on the watermark information; obtaining a synchronous addressing array corresponding to the first application, and recording, in the synchronous addressing array, that the watermark of the data of the first data type of the first electronic device has changed, where the synchronous addressing array is used to record an electronic device in which a watermark of data of the first application has changed; and when determining to consume the data of the first data type of the first application, synchronizing the data of the first data type of the first application with the first electronic device based on the synchronous addressing array.

According to any one of the fourth aspect or the foregoing implementations of the fourth aspect, when the processor reads the computer instructions from the memory, the electronic device is further enabled to perform the following operation: updating the synchronous addressing array, where the electronic device that is recorded in an updated synchronous addressing array and in which the watermark of the data of the first data type has changed does not include the first electronic device.

According to any one of the fourth aspect or the foregoing implementations of the fourth aspect, when the processor reads the computer instructions from the memory, the electronic device is further enabled to perform the following operation: sending a second application list to the first electronic device, where the second application list indicates application installation of the second electronic device; and receiving a first application list sent by the first electronic device, where the first application list indicates application installation of the first electronic device.

According to any one of the fourth aspect or the foregoing implementations of the fourth aspect, when the processor reads the computer instructions from the memory, the electronic device is further enabled to establish a first connection to the first electronic device. The receiving watermark information sent by a first electronic device includes: receiving, through the first connection, a data packet sent by the first electronic device, where the data packet includes an application identifier field and a data type field, the application identifier field indicates the first application, and the data type field indicates the first data type.

According to any one of the fourth aspect or the foregoing implementations of the fourth aspect, the receiving watermark information sent by a first electronic device includes: receiving a broadcast packet sent by the first electronic device, where the broadcast packet includes an application identifier field and a data type field, the application identifier field indicates the first application, and the data type field indicates the first data type.

For technical effect corresponding to the fourth aspect and any one of the implementations of the fourth aspect, refer to the technical effect corresponding to the fourth aspect and any one of the implementations of the fourth aspect.

According to a fifth aspect, a data synchronization system is provided. The system includes a first electronic device and a second electronic device. The first electronic device is configured to: determine, after a first application on the first electronic device generates data of a first data type, the second electronic device corresponding to the first application, where the first application is installed on the second electronic device; record, in a watermark indication matrix corresponding to the second electronic device, that a watermark of the data of the first data type of the first application has changed, where the watermark indication matrix is used to record watermark change statuses of data of a plurality of data types; and send watermark information to the second electronic device, where the watermark information indicates a watermark change status recorded in the watermark indication matrix. The second electronic device is configured to: receive the watermark information; and synchronize the data of the first data type of the first application with the first electronic device based on the watermark information.

According to the fifth aspect, the first electronic device is further configured to: send a first application list to the second electronic device, where the first application list indicates application installation of the first electronic device; and the second electronic device is further configured to: send a second application list to the first electronic device, where the second application list indicates application installation of the second electronic device.

According to any one of the fifth aspect or the foregoing implementations of the fifth aspect, the first electronic device is further configured to: determine, based on the second application list, a target application installed on both the first electronic device and the second electronic device, where the target application includes the first application; and establish the watermark indication matrix corresponding to the second electronic device, where the watermark indication matrix indicates a watermark change status of data of the target application.

According to any one of the fifth aspect or the foregoing implementations of the fifth aspect, the first electronic device is further configured to: clear a watermark change status that is of the data of the first data type of the first application and that is recorded in the watermark indication matrix.

According to any one of the fifth aspect or the foregoing implementations of the fifth aspect, the second electronic device is further configured to: determine the first application and the first data type based on the watermark information; obtain a synchronous addressing array corresponding to the first application, and record, in the synchronous addressing array, that the watermark of the data of the first data type of the first electronic device has changed, where the synchronous addressing array is used to record an electronic device in which a watermark of data of the first application has changed; and when determining to consume the data of the first data type of the first application, synchronize the data of the first data type of the first application with the first electronic device based on the synchronous addressing array.

According to any one of the fifth aspect or the foregoing implementations of the fifth aspect, the second electronic device is further configured to update the synchronous addressing array, where the electronic device that is recorded in an updated synchronous addressing array and in which the watermark of the data of the first data type has changed does not include the first electronic device.

For technical effect corresponding to the fifth aspect and any one of the implementations of the fifth aspect, refer to the technical effect corresponding to the first aspect and any one of the implementations of the first aspect, or the technical effect corresponding to the second aspect and any one of the implementations of the second aspect. Details are not described herein again.

According to a sixth aspect, an electronic device is provided. The electronic device has a function of implementing the data synchronization method according to the first aspect and any one of the possible implementations of the first aspect, or the electronic device has a function of implementing the data synchronization method according to the second aspect and any one of the possible implementations of the second aspect. The function may be implemented by hardware, or may be implemented by hardware executing corresponding software. The hardware or the software includes one or more modules corresponding to the function.

For technical effect corresponding to the sixth aspect and any one of the implementations of the sixth aspect, refer to the technical effect corresponding to the first aspect and any one of the implementations of the first aspect, or the technical effect corresponding to the second aspect and any one of the implementations of the second aspect. Details are not described herein again.

According to a seventh aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect, or the electronic device is enabled to perform the method according to any one of second aspect or the implementations of the second aspect.

For technical effect corresponding to the seventh aspect and any implementation of the seventh aspect, refer to the technical effect corresponding to the first aspect and any one of the implementations of the first aspect. Details are not described herein again.

According to an eighth aspect, a computer program product is provided. When the computer program product runs on an electronic device, the electronic device is enabled to perform the method according to any one of the first aspect or the implementations of the first aspect, or the electronic device is enabled to perform the method according to any one of second aspect or the implementations of the second aspect.

For technical effect corresponding to the eighth aspect and any implementation of the eighth aspect, refer to the technical effect corresponding to the first aspect and any one of the implementations of the first aspect. Details are not described herein again.

According to a ninth aspect, this application provides a circuit system. The circuit system includes a processing circuit. The processing circuit is configured to perform the method according to any one of the first aspect or the implementations of the first aspect, or the processing circuit is configured to perform the method according to any one of second aspect or the implementations of the second aspect.

For technical effect corresponding to the ninth aspect and any one of the implementations of the ninth aspect, refer to the technical effect corresponding to the first aspect and any one of the implementations of the first aspect. Details are not described herein again.

According to a tenth aspect, this application provides a chip system, including at least one processor and at least one interface circuit. The at least one interface circuit is configured to: perform a transceiver function; and send instructions to the at least one processor. When the at least one processor executes the instructions, the at least one processor performs the method according to any one of the first aspect or the implementations of the first aspect. Alternatively, when the at least one processor executes the instructions, the at least one processor performs the method according to any one of second aspect or the implementations of the second aspect.

For technical effect corresponding to the tenth aspect and any one of the implementations of the tenth aspect, refer to the technical effect corresponding to the first aspect and any one of the implementations of the first aspect. Details are not described herein again.

**BRIEF DESCRIPTION OF DRAWINGS**

FIG. 1 is a diagram of a communication system to which a data synchronization method is applied according to an embodiment of this application;
FIG. 2-1 is a diagram of a hardware structure of a first electronic device according to an embodiment of this application;
FIG. 2-2 is a block diagram of a software structure of a first electronic device 100 according to an embodiment of this application;
FIG. 3 is a diagram 1 of a data synchronization scenario according to an embodiment of this application;
FIG. 4 is a diagram 2 of a data synchronization scenario according to an embodiment of this application;
FIG. 5 is a diagram of a structure of a watermark link establishment synchronization data packet according to an embodiment of this application;

FIG. 6 is a diagram of a structure of a watermark broadcast synchronization data packet according to an embodiment of this application;

FIG. 7 is a schematic flowchart of a data synchronization method according to an embodiment of this application;

FIG. 8 is a diagram of a structure of a first electronic device according to an embodiment of this application; and

FIG. 9 is a diagram of a structure of a second electronic device according to an embodiment of this application.

DESCRIPTION OF EMBODIMENTS

The following describes technical solutions in embodiments of this application with reference to accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some scenarios, a super device can implement collaborative management and resource sharing of a plurality of devices. For example, after a mobile phone collaborates with a nearby device, for example, a tablet, a computer, or a smart screen, the super device may be formed. In this case, a user may continue a current task of another device on a collaborative device in the super device, for example, the user continues to watch, on the smart screen, a video that is being played on the mobile phone, or continues to edit, on the computer, a file that is being edited on the mobile phone. To implement functions of the super device, different electronic devices need to maintain multi-end data consistency through data synchronization.

In some examples, after determining that data changes, an electronic device pushes changed data to another electronic device in a communication system, to implement data consistency between different electronic devices.

However, in the foregoing solution, after receiving the changed data sent by the source electronic device and completing data synchronization, the another electronic device may not use synchronized data. In this case, the data synchronization is unnecessary data synchronization, wasting resources.

In some other examples, an electronic device requests on-demand synchronization with another electronic device in a communication system, to reduce unnecessary data synchronization.

For example, the electronic device enables a wireless local area network (wireless local area network, WLAN) function, a Bluetooth function, and the like, and the another electronic device may find the electronic device, and determine that the electronic device goes online. Then, different electronic devices may perform on-demand synchronization on system data to form the super device. The system data includes, for example, bundle manager service (bundle manager service, BMS) data, device profile (device profile, DP) data, and distributed hardware manager service (distributed hardware manager service, DHMS) data.

For another example, in the super device, after detecting an operation indicated by the user to start an application A, the electronic device may wake up a peer device, to pull data (for example, pull data) of the application A in the peer device, and display the application A after completing data synchronization. In this way, the user may view synchronized data of the application A on the electronic device. The application A includes, for example, a plurality of applications such as a schedule application, a contact application, and a notes application. The peer device is, for example, one or more other electronic devices other than the electronic device that is about to perform data synchronization in the super device. For example, the smart screen pulls data of a video application in the mobile phone in response to an operation indicated by the user to start the video application, to continue playing, on the smart screen, a video that is being played on the mobile phone.

In some embodiments, if the electronic device needs to perform data synchronization with the peer electronic device, a link needs to be established first. Then, the electronic device performs data exchange with the peer device based on the established link, to determine whether data of the peer device changes. If the data changes, data synchronization may be performed.

However, in some scenarios, after waking up the peer device, establishing the link to the peer device, and performing data interaction, the electronic device determines that the data of the peer device is not changed and data synchronization is not required. Therefore, in the foregoing process, unnecessary power consumption is caused, and performance of the electronic device is reduced.

For example, after going online, the electronic device continuously wakes up the peer device, to synchronize a plurality of types of system data. However, system data of the peer device is not changed. As a result, the electronic device wakes up the peer device for a plurality of times, and data synchronization does not need to be performed. Consequently, unnecessary power consumption is caused.

For another example, in response to a user operation, the electronic device starts the application A, and wakes up the peer device to pull the changed data of the device A in the peer device. However, the data of the application A in the peer device is not changed, and data synchronization does not need to be performed. Consequently, unnecessary power consumption is caused.

In some embodiments, an age of information (age of information, AoI) is optimized, to improve information timeliness and an information gain in a data synchronization process performed in a pull manner, and reduce power consumption. The AoI refers to a time interval since information newly received by a target node is generated, and this indicator is proposed in recent years and is used to measure freshness of status information.

In some examples, an AoI optimization algorithm is used to reduce a cumulative weighted average of peak ages of information of all nodes, so that power consumption of data transmission is considered from a perspective of the age of the information. Alternatively, an AOI optimization algorithm is used to adjust a device selection policy, a computation offloading policy, and a status information update waiting policy, to optimize an AoI of a device, so as to implement a cost constraint of data synchronization.

However, the foregoing data synchronization method does not consider data consistency between a plurality of devices, and is not applicable to a multi-device collaborative management scenario in a distributed system.

Therefore, an embodiment of this application provides a data synchronization method. A first electronic device maintains a watermark indication matrix, and when data changes, sends watermark information to a second electronic device based on the watermark indication matrix, to synchronize data watermarks. The second electronic device updates a corresponding synchronous addressing array based on the obtained watermark information. Subsequently, the second electronic device may perform data synchronization as required based on the synchronous addressing array. This effectively reduces power consumption of data synchronization.

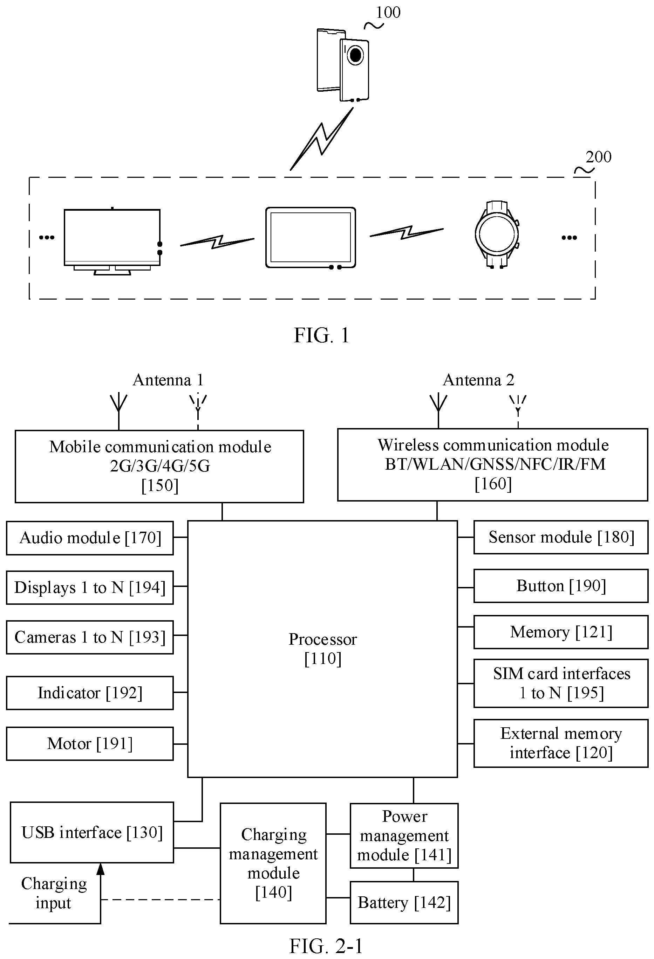

FIG. 1 is a diagram of a communication system to which a data synchronization method is applied according to an embodiment of this application. As shown in FIG. 1, the communication system includes a first electronic device 100 and a second electronic device 200.

Optionally, the first electronic device 100 or the second electronic device 200 may be, for example, a terminal device like a mobile phone, a tablet computer, a notebook computer, a smart screen, a wearable device, a vehicle-mounted terminal, an ultra-mobile personal computer (ultra-mobile personal computer, UMPC), a netbook, a personal digital assistant (personal digital assistant, PDA), or an artificial intelligence (artificial intelligence, AI) device. An operating system installed on the first electronic device 100 or the second electronic device 200 includes but is not limited to iOS®, Android®, HarmonyOS®, Windows®, Linux®, or another operating system. A specific type of the first electronic device 100 or the second electronic device 200 and an operating system installed on the first electronic device 100 or the second electronic device 200 are not limited in this application.

In some embodiments, a wireless communication connection is established between the first electronic device 100 and the second electronic device 200. A wireless communication technology for establishing the wireless communication connection includes but is not limited to at least one of the following: Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), and the like.

Optionally, a communication connection may alternatively be established between the first electronic device 100 and the second electronic device 200 through a third-party device in a local area network. The third-party device is, for example, a router, a gateway, a smart device controller, or a server.

In some embodiments, the first electronic device 100 is a device accessing a communication system including a plurality of second electronic devices 200. In some examples, after accessing the communication system, the first electronic device 100 sends an application list 1 to the second electronic device 200 in the communication system, where the application list 1 includes information about all applications installed on the first electronic device 100. In addition, the first electronic device 100 receives an application list 2 sent by each second electronic device 200, where the application list 2 includes information about all applications installed on each second electronic device 200. In this way, each electronic device (for example, the first electronic device 100 and the second electronic device 200) in the communication system may determine an application installed on both the electronic device and a peer device, and generate a watermark indication matrix. The watermark indication matrix indicates a data difference between a specified device and the current device for a specified service. Different applications correspond to different services, or an application includes a plurality of services.

Optionally, after determining that data of an application changes, the first electronic device 100 may correspondingly update a watermark indication matrix. Then, the first electronic device 100 sends, based on an updated watermark indication matrix, watermark information to the second electronic device 200 on which the application is also installed, to synchronize data watermarks.

Optionally, the second electronic device 200 further maintains a synchronous addressing array, and the synchronous addressing array indicates a device from which data needs to be pulled during data consumption of the second electronic device. Optionally, the second electronic device 200 updates the synchronous addressing array based on the received watermark information.

For example, data of an application 1 on the first electronic device 100 is updated, and the first electronic device 100 generates a corresponding watermark indication matrix based on the updated data. Then, the first electronic device 100 sends watermark information to the second electronic device 200 based on the watermark indication matrix, to synchronize data watermarks. Correspondingly, after receiving the watermark information, the second electronic device 200 may record, based on the watermark information by using a synchronous addressing array corresponding to the application 1, that a watermark of the data of the application 1 on the first electronic device 100 is updated, for example, record that a device in which the data of the application 1 is updated is the first electronic device 100. In this way, subsequently, when the second electronic device 200 needs to use the application 1, the second electronic device 200 may determine, based on the synchronous addressing array, that the data of the application 1 on the first electronic device 100 is updated, and determine to pull the data of the application 1 from the first electronic device 100, to implement data synchronization of the application 1. When the second electronic device 200 needs to use an application 2, the second electronic device 200 may determine, based on a synchronous addressing array corresponding to the application 2, that data of the application 2 is not updated, and data synchronization does not need to be performed.

In this way, on-demand data synchronization between electronic devices is implemented, and unnecessary power consumption is avoided.

Optionally, the first electronic device 100 and the second electronic device 200 in embodiments of this application may be implemented by using different devices, and the different devices may have same, similar, or different hardware structures, for example, a hardware structure shown in FIG. 2-1.

An example in which the first electronic device 100 has the hardware structure shown in FIG. 2-1 is used to describe the hardware structure shown in FIG. 2-1.

As shown in FIG. 2-1, the first electronic device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identitymodule, SIM) card interface 195, and the like.

It may be understood that the structure shown in this embodiment of this application does not constitute a specific limitation on the first electronic device 100. In some other embodiments of this application, the first electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the first electronic device 100.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100. The processor 110 communicates with the display 194 through the DSI interface, to implement a display function of the first electronic device 100.

The USB interface 130 is an interface that conforms to a USB standard specification, and may be specifically a mini USB interface, a micro USB interface, a USB type-C interface, or the like. The USB interface 130 may be configured to connect to the charger to charge the first electronic device 100, or may be configured to transmit data between the first electronic device 100 and a peripheral device, or may be configured to connect to a headset for playing audio through the headset. The interface may be further configured to connect to another first electronic device, for example, an AR device.

It may be understood that, an interface connection relationship between the modules shown in this embodiment of this application is merely an example for description, and does not constitute a structural limitation on the first electronic device 100. In some other embodiments of this application, the first electronic device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the first electronic device 100. The charging management module 140 may further supply power to the first electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the first electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite-based augmentation system (satellite-based augmentation system, SBAS).

The first electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the first electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 may include one or N cameras 193, where N is a positive integer greater than 1.

The external memory interface 120 may be configured to connect to an external storage card, for example, a micro SD card, to expand a storage capability of the first electronic device 100. The external storage card communicates with the processor 110 through the external memory interface 120, to implement a data storage function. For example, files such as music and videos are stored in the external storage card.

The memory 121 may be configured to store computer-executable program code. The executable program code includes instructions. The memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the memory 121 may include a high-speed random access memory, and may further include a non-volatile memory, for example, at least one magnetic disk storage device, a flash memory, or a universal flash storage (universal flash storage, UFS). The processor 110 runs instructions stored in the memory 121 and/or instructions stored in the memory disposed in the processor, to perform various function applications of the first electronic device 100 and data processing.

In some embodiments, the first electronic device 100 determines that data changes, for example, determines that system data changes, and then may update, through the processor 110, a watermark indication matrix stored in the memory 121. In addition, the first electronic device 100 may send corresponding watermark information to the second electronic device 200 based on an updated watermark indication matrix through the wireless communication module 160. Correspondingly, after receiving the watermark information, the second electronic device 200 updates a synchronous addressing array based on the watermark information, so that the second electronic device 200 subsequently synchronizes, as required, data that has changed in the first electronic device 100 and that is indicated in the synchronous addressing array.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The first electronic device 100 may use the audio module 170 to implement music playing, recording, and the like. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, the touch sensor, an ambient light sensor, a bone conduction sensor, and the like.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The first electronic device 100 may support one or N SIM card interfaces, where N is a positive integer greater than 1.

A software system of the first electronic device 100 or the second electronic device 200 may use a layered architecture, an event-driven architecture, a microkernel architecture, a microservice architecture, or a cloud architecture. In embodiments of this application, an Android system with a layered architecture is used as an example to describe a software structure of the first electronic device 100 or the second electronic device 200.

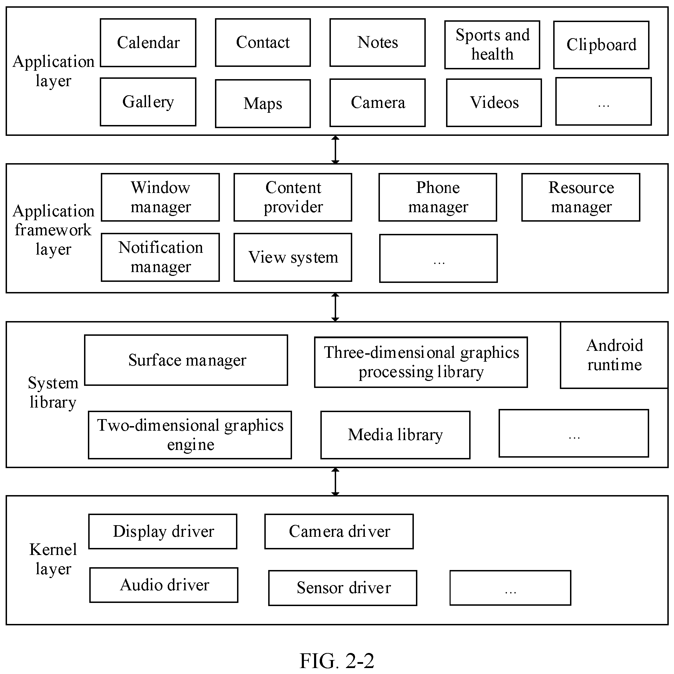

FIG. 2-2 is a block diagram of a software structure of the first electronic device 100 according to an embodiment of this application. The second electronic device 200 may have a same, similar, or different software structure.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2-2, the application package may include applications such as Calendar, Contact, Notes, Sports and health, Clipboard, Gallery, Maps, Camera, and Videos.

The application framework layer provides an application programming interface (application programming interface, API) and a programming framework for an application at the application layer. The application framework layer includes some predefined functions.

As shown in FIG. 2-2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The phone manager is configured to provide a communication function for the first electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. The notification manager may alternatively be a notification that appears in a top status bar of the system in a form of a graph or a scroll bar text.

The Android runtime includes a core library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The following describes, with reference to a calendar data synchronization scenario, an example of a working procedure of software and hardware of the first electronic device 100 and the second electronic device 200.

In the first electronic device 100, when the touch sensor receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap touch operation, and the control corresponding to the single-tap operation is a control of a calendar application icon. A calendar application invokes an interface of the application framework layer to start the calendar application. Then, in a process of displaying the calendar application, the first electronic device 100 detects, through the touch sensor, a touch operation of a user on the calendar application, determines that data of the calendar application changes, and may generate a watermark indication matrix through the processor 110. The watermark indication matrix indicates a change of a data status of the calendar application. Then, the first electronic device 100 may send watermark information to the second electronic device 200 through the wireless communication module 160, where the watermark information indicates that the data of the calendar application on the first electronic device 100 changes. Optionally, in response to the change of the data of the calendar application, after recording, in the watermark indication matrix, the change of the data of the calendar application, the first electronic device may trigger sending of the watermark information to the second electronic device 200. Optionally, before sending the watermark information to the second electronic device 200, the first electronic device 100 may further first determine a device status of the second electronic device 200. If the second electronic device 200 is in an active state, the first electronic device 100 may send the watermark information to the second electronic device 200. If the second electronic device 200 is in a sleep state, the first electronic device 100 may wait, through polling, for the second electronic device 200 to switch from the sleep state to the active state, and then send the watermark information to the second electronic device 200 based on the watermark indication matrix.

Correspondingly, the second electronic device 200 may obtain the watermark information sent by the first electronic device 100. Then, the second electronic device 200 updates a synchronous addressing array based on the watermark information, where the synchronous addressing array indicates that a device in which the data of the calendar application is updated includes the first electronic device 100; and stores the synchronous addressing array through a memory. Subsequently, the second electronic device 200 detects a touch operation of the user through a touch sensor, and sends an interrupt of the touch operation to a kernel layer, to generate a corresponding input event and send the input event to an application framework layer. The application framework layer identifies the input event, and determines that the user indicates to start the calendar application. In this case, the second electronic device 200 may obtain the synchronous addressing array stored in the memory, and determine, based on the synchronous addressing array, whether data synchronization needs to be performed. If the second electronic device 200 determines, based on the synchronous addressing array, that the data of the calendar application on the first electronic device 100 has changed, it may be determined that the data of the calendar application needs to be synchronized with the first electronic device 100. In this case, the second electronic device 200 may send a data synchronization request to the first electronic device 100, to synchronize the data of the calendar application. After the data of the calendar application is synchronized, the second electronic device 200 may start and display the calendar application.

In some embodiments, a communication system includes a plurality of electronic devices, a same application or different applications may be installed on different electronic devices, and different electronic devices determine, by exchanging application lists, a same distributed application as that on a peer electronic device. In this way, data watermark synchronization and data synchronization are subsequently performed between electronic devices on which a same application is installed. Optionally, the data watermark synchronization indicates that data synchronization is performed between different electronic devices. After the data synchronization, different electronic devices have a same data status corresponding to synchronized data, that is, data watermarks are the same. Further, after an electronic device generates a data update, a data status of data changes. In this case, the electronic device may indicate a change status of the data status by recording a data watermark change.

For example, a device identifier of a local device is $Dev_i$, and a list of distributed applications installed on the local device is $A_i = \left\{ A_i^k \middle| k \in [1, n_i], A_i^k \in AppList \right\}$. AppList is an ordered list of the distributed applications. When accessing the communication system, the local device sends the application list to another electronic device in the communication system via a broadcast message, and obtains, by receiving a broadcast message, an application list broadcast by the another electronic device in the communication system.

Optionally, the devices in the communication system may construct a global device-application watermark indication matrix via exchanged broadcast messages. The matrix is formed by combining submatrices of device pairs, and each submatrix indicates a data watermark status of a same application installed on two electronic devices in a device pair.

For example, after receiving a broadcast message, the electronic device $Dev_i$ determines an application intersection set between the local device and a peer device that sends the broadcast message, that is, determines a set of applications installed on both the two electronic devices. If a device identifier of the peer device is $Dev_j$, the electronic device $Dev_i$ determines the application intersection set $A_{ij} = A_i \cap A_j$. Then, the electronic device $Dev_i$ establishes a watermark indication matrix $W_{ij}^{|A_{ij}|*m}$ corresponding to a device pair ($Dev_i$, $Dev_j$), where a quantity of rows in the watermark indication matrix $W_{ij}^{|A_{ij}|*m}$ is a quantity of applications included in the application intersection set $A_{ij}$, and a quantity of columns is a quantity m of data type dimensions corresponding to the applications included in the application intersection set $A_{ij}$. The application intersection set $A_{ij}$ includes one or more applications, one application includes one or more data types, and different applications include same, partially same, or different data types. In this case, after determining the applications included in the application intersection set $A_{ij}$, the electronic device $Dev_i$ may determine a data type corresponding to these applications, to determine the corresponding quantity m of data type dimensions. Each row in the watermark indication matrix $W_{ij}^{|A_{ij}|*m}$ indicates whether an application $A_{ij}^k$ generates a data update on the device $Dev_i$ and whether an unsynchronized data watermark exists. For example, a bit whose value is 1 in the watermark indication matrix $W_{ij}^{|A_{ij}|*m}$ indicates that the data update has been generated on the electronic device $Dev_i$ or the unsynchronized data watermark exists; or a bit whose value is 0 in the watermark indication matrix $W_{ij}^{|A_{ij}|*m}$ indicates that no data update has been generated on the electronic device $Dev_i$ and a data watermark has been synchronized. Optionally, after an electronic device joins the communication system, data synchronization may be performed, and an initialized watermark indication matrix is established after the data synchronization. The initialized watermark indication matrix indicates that data watermarks of two electronic devices in a device pair are the same, that is, data is synchronized.

For example, the electronic device $Dev_i$ initializes the watermark indication matrix $W_{ij}^{|A_{ij}|*m}$, and sets values of all locations in the watermark indication matrix $W_{ij}^{|A_{ij}|*m}$ to 0 by default.

Correspondingly, another electronic device in the communication system may also establish, based on a received broadcast message, a watermark indication matrix corresponding to the another electronic device. For example, the electronic device $Dev_j$ determines an application intersection set $A_{ji} = A_j \cap A_i$ with the electronic device $Dev_i$, and establishes a watermark indication matrix $W_{ji}^{|A_{ji}|*m}$ corresponding to a device pair $(Dev_j, Dev_i)$, where a quantity of rows in the watermark indication matrix $W_{ji}^{|A_{ji}|*m}$ is a quantity of applications included in the application intersection set $A_{ji}$, and a quantity of columns is a quantity m of data type dimensions corresponding to the applications included in the application intersection set $A_{ji}$.

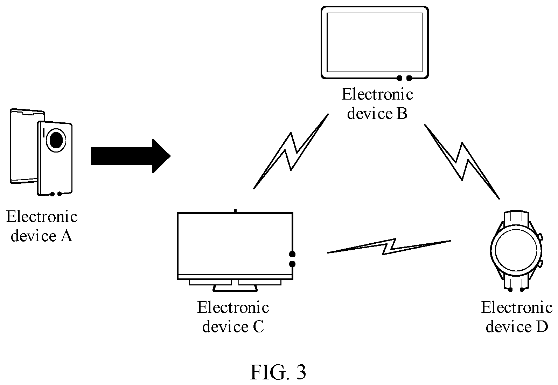

For example, as shown in FIG. 3, an electronic device A accesses a communication system, and the communication system already includes an electronic device B, an electronic device C, and an electronic device D. Installation statuses of applications on the electronic devices are shown in the following Table 1. In this case, when accessing the communication system, the electronic device A may separately send a broadcast message to the electronic device B, the electronic device C, and the electronic device D. The broadcast message carries an application list of the electronic device A, to indicate that applications such as an application 1, an application 2, and an application 3 are installed on the electronic device A. In addition, when determining that a new device accesses the communication system, another electronic device in the communication system may send a broadcast message to the electronic device newly accessing the communication system, to notify the newly accessing electronic device of an application installed on the another electronic device. For example, the electronic device A may receive a broadcast message sent by another electronic device, and obtain application installation of the another electronic device. Based on this, an electronic device in the communication system may form a device pair with each of other electronic devices, and generate a watermark indication matrix corresponding to each device pair.

Table 1

| Electronic device A | Application 1 | Application 2 | Application 3 | ... |
|---|---|---|---|---|
| Electronic device B | Application 1 | Application 2 | Application 3 | ... |
| Electronic device C | ... | Application 2 | Application 3 | ... |
| Electronic device D | Application 1 | ... | ... | ... |

For example, in the scenario shown in FIG. 3, an example in which the electronic device A generates a watermark indication matrix is used to describe in detail a process of generating the watermark indication matrix.

Optionally, after accessing the communication system, an electronic device may determine, by interacting with an electronic device in the communication system, all data types included in different electronic devices, and further generate a watermark indication matrix based on the determined data types. For example, the electronic device A determines that all the data types in the communication system include d1, d2, and d3.

As shown in the foregoing Table 1, the electronic device A receives a broadcast message sent by the electronic device B, and obtains an application list of the electronic device B included in the broadcast message. The electronic device A determines, based on the application list of the electronic device B, that an application intersection set between the electronic device A and the electronic device B includes the application 1, the application 2, and the application 3, where a data type of service data included in the application 1 is d1, a data type of service data included in the application 2 is d2, and a data type of service data included in the application 3 is d3. Based on this, the electronic device A may establish a watermark indication matrix shown in the following Table 2. The electronic device A determines, based on a quantity of applications included in the application intersection set being 3, that a quantity of rows in the watermark indication matrix is 3, and determines, based on a quantity m of data type dimensions being 3, that a quantity of columns in the watermark indication matrix is 3. Watermarks of service data of the electronic device A and the electronic device B in an initialized watermark indication matrix are the same, and values of locations of corresponding data types in different application rows are set to 0.

Optionally, one application may include service data of one or more data types, different applications may include service data of a same data type or different data types, and an electronic device may store service data of different data types in different databases. Based on this, the electronic device creates a watermark indication matrix indicating an application and a watermark change status of data of a data type. Subsequently, after updating a watermark indication matrix based on a data change, an electronic device may directly indicate, by sending the watermark indication matrix, a peer device to determine an application whose data changes and a corresponding data type, so that the peer device may request to synchronize data in a corresponding database to the electronic device.

Optionally, the service data includes, for example, data such as system data and application data. For example, the system data includes data such as DP data, BMS data, and DHMS data. For example, the application data includes data such as metadata, thumbnail data, calendar data, contact data, notes data, sports and health data, and clipboard data.

Table 2

| Data type | d1 | d2 | d3 |
|---|---|---|---|
| Application 1 | 0 | | |
| Application 2 | | 0 | |
| Application 3 | 0 | | |

As shown in the foregoing Table 1, the electronic device A receives a broadcast message sent by the electronic device C, and obtains an application list of the electronic device C included in the broadcast message. The electronic device A determines, based on the application list of the electronic device C, that an application intersection set between the electronic device A and the electronic device C includes the application 2 and the application 3. Based on this, the electronic device A may establish a watermark indication matrix shown in the following Table 3, where the data type of the service data included in the application 2 is d2, and the data type of the service data included in the application 3 is d1. Watermarks of service data of the electronic device A and the electronic device C in an initialized watermark indication matrix are the same, and locations of corresponding data types in different application rows are set to 0.

Table 3

| Data type | d1 | d2 | d3 |
|---|---|---|---|
| Application 2 | | 0 | |
| Application 3 | 0 | | |

As shown in the foregoing Table 1, the electronic device A receives a broadcast message sent by the electronic device D, and obtains an application list of the electronic device D included in the broadcast message. The electronic device A determines, based on the application list of the electronic device D, that an application intersection set between the electronic device A and the electronic device D includes the application 1. Based on this, the electronic device A may establish a watermark indication matrix shown in the following Table 4, where the data type of the service data included in the application 1 is d1. Watermarks of service data of the electronic device A and the electronic device D in an initialized watermark indication matrix are the same, and locations of corresponding data types in different application rows are set to 0.

Table 4

| Data type | d1 | d2 | d3 |
|---|---|---|---|
| Application 1 | 0 | | |

Therefore, the electronic device A generates, by interacting with the other electronic devices in the communication system, the watermark indication matrix corresponding to each device pair. After the watermark indication matrices are combined, a global device-application watermark indication matrix may be generated.

In some embodiments, after determining that data is updated, an electronic device may correspondingly update a watermark indication matrix including a data type. Different watermark indication matrices may include data types corresponding to a same application. In this case, when determining the watermark indication matrix that needs to be updated, the electronic device may need to traverse all watermark indication matrices, resulting in high power consumption. Therefore, after completing establishment of the watermark indication matrix, the electronic device may reversely construct an application-device mapping array based on an initialized watermark indication matrix and an inverted index, to indicate an electronic device on which a same application is installed. In this way, after determining that data of an application is updated, the electronic device may directly determine an electronic device on which the application is installed, and further update a watermark indication matrix corresponding to the determined electronic device.

For example, after establishing the watermark indication matrix corresponding to the electronic device $Dev_j$, the electronic device $Dev_i$ establishes an application-device mapping array $ADMap_i$ based on an inverted index, where each row $ADMap_i^j = DevSubset$ is a device subset having an application $A_i^k$.

For example, corresponding to the scenario shown in FIG. 3, after separately establishing the watermark indication matrices shown in the foregoing Table 2 to Table 4 with the electronic device B, the electronic device C, and the electronic device D, the electronic device A may establish an application-device mapping array shown in the following Table 5 based on an inverted index. For example, as shown in the following Table 5, the electronic device A may determine that electronic devices on which the application 1 is installed include the electronic device B and the electronic device D, electronic devices on which the application 2 is installed include the electronic device B and the electronic device C, and electronic devices on which the application 3 is installed include the electronic device B and the electronic device C.

Table 5

| Application 1 | Electronic device B | Electronic device D |
|---|---|---|
| Application 2 | Electronic device B | Electronic device C |
| Application 3 | Electronic device B | Electronic device C |
| ... | ... | ... |

In some embodiments, after establishing the watermark indication matrix, the electronic device dynamically updates the corresponding watermark indication matrix based on a data update status.

Optionally, the electronic device performs on-demand watermark synchronization or polling waiting. For example, after determining that data is updated, the electronic device determines, based on an application-device mapping array, a device of an application including updated data. Then, the electronic device sets a value of a corresponding bit in the determined watermark indication matrix to 1, and sends an updated watermark indication matrix to a device corresponding to the watermark indication matrix, to indicate a peer device to perform watermark synchronization. For another example, after the electronic device finishes updating the watermark indication matrix, the peer device is in a sleep state or a low battery state, and cannot receive the updated watermark indication matrix in time. In this case, the electronic device may perform polling waiting, and then send the updated watermark indication matrix to the peer device when the peer device can receive information (for example, the peer device switches to an active state or a non-low battery state). Optionally, in a process in which the electronic device performs polling waiting, if the electronic device determines that the electronic device needs to switch to the sleep state or the low battery state, the electronic device may forcibly send the updated watermark indication matrix to the peer device, for example, forcibly wake up the peer device, so that the peer device receives the updated watermark indication matrix. Optionally, in the process in which the electronic device performs polling waiting, a plurality of data updates may be generated. In this case, the electronic device may accumulatively record, by updating a corresponding watermark indication matrix, a data type of a to-be-synchronized watermark of the peer device.

Optionally, after determining that the peer device receives the updated watermark indication matrix, the electronic device may set a value of a corresponding bit in the locally stored watermark indication matrix to 0, to indicate that data watermarks corresponding to the bit in the local device and the peer device are the same. Optionally, after the electronic device sends the updated watermark indication matrix to the peer device, and the peer device requests the local device to pull and synchronize the data whose data status changes and that is indicated by the updated watermark indication matrix, the electronic device may set the value of the corresponding bit in the locally stored watermark indication matrix to 0. To be specific, after determining that the local device and the peer device have synchronized the data whose data status changes and that is indicated by the updated watermark indication matrix, the electronic device updates the watermark indication matrix to indicate that the data watermarks of the local device and the peer device are the same.

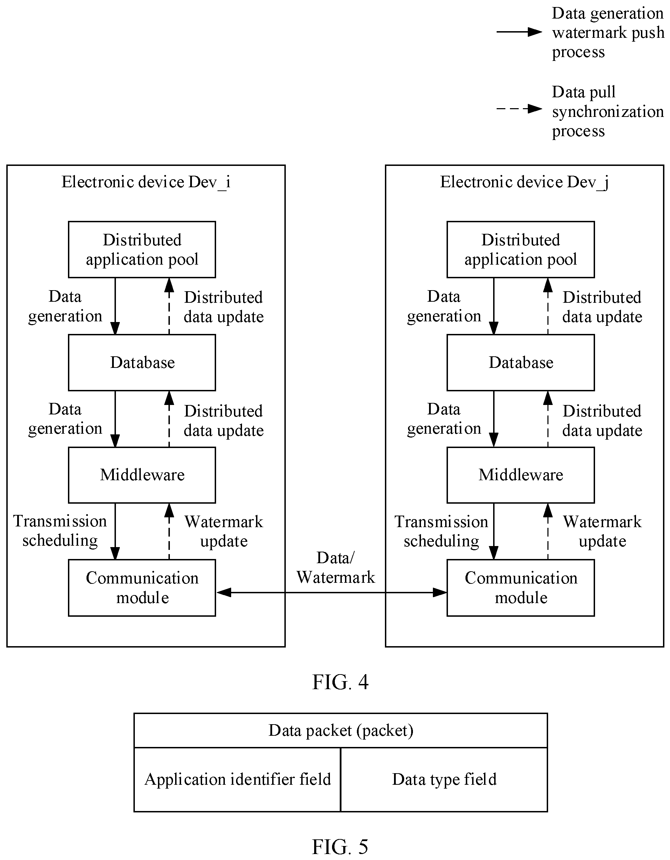

For example, as shown in FIG. 4, after determining that a distributed application $A_i^k$ in a distributed application pool updates data (for example, generates data), the electronic device $Dev_i$ adds the newly generated data to a database, where a data type of updated data is $d_p$. The electronic device $Dev_i$ determines, based on the local application-device mapping array $ADMap_i^j$, a device list corresponding to the application $A_i^k$. Then, the electronic device $Dev_i$ updates, through middleware, a watermark indication matrix $W_{ij}$ between the electronic device and each device in the device list, and sets a location of a column corresponding to a data type $d_p$ in a corresponding row in the watermark indication matrix

$A_i^k$ to 1. Then, the electronic device Dev$_i$ sends an updated watermark indication matrix W$_{ij}$ to the electronic device Dev$_j$ through a communication module, to perform watermark synchronization.

For example, in the scenario shown in FIG. 3, in a process of displaying the application 1, the electronic device A generates new data in response to a user operation, where a data type of the data is d1. In this case, the electronic device A determines, based on the application-device mapping array shown in the foregoing Table 5, that a device list corresponding to the application 1 includes the electronic device B and the electronic device D. In this case, as shown in the following Table 6, the electronic device A may set, in the watermark indication matrix corresponding to the electronic device A and the electronic device B shown in the foregoing Table 2, a location corresponding to a data type d1 in a row corresponding to the application 1 to 1. In addition, as shown in the following Table 7, the electronic device A may set, in the watermark indication matrix corresponding to the electronic device A and the electronic device D shown in the foregoing Table 4, a location corresponding to a data type d1 in a row corresponding to the application 1 to 1.

Then, the electronic device A sends an updated watermark indication matrix shown in the following Table 6 to the electronic device B, and after determining that the sending succeeds, sets the location corresponding to the data type d1 in the row corresponding to the application 1 in the following Table 6 to 0. For example, if the electronic device A needs to update the watermark indication matrix shown in the following Table 6 again, the electronic device A needs to first obtain the watermark indication matrix shown in the foregoing Table 2. The electronic device A sends an updated watermark indication matrix shown in the following Table 7 to the electronic device D, and after determining that the sending succeeds, sets the location corresponding to the data type d1 in the row corresponding to the application 1 in the following Table 7 to 0. For example, if the electronic device A needs to update the watermark indication matrix shown in the following Table 7 again, the electronic device A needs to first obtain the watermark indication matrix shown in the foregoing Table 4. That is, after performing data watermark synchronization, an electronic device sets a corresponding location in a corresponding watermark indication matrix between devices to 0, to indicate that watermarks of data corresponding to the location in the two devices are the same.

After receiving the watermark indication matrix, the peer device records a device that sends the watermark indication matrix and a data watermark indicated by the watermark indication matrix for synchronization, to subsequently pull data for synchronization as required. For example, the electronic device A sends the updated watermark indication matrix shown in the following Table 6 to the electronic device B. After receiving the updated watermark indication matrix, the electronic device B may determine that a device that sends the watermark indication matrix is the electronic device A, and may determine, by using the watermark indication matrix, a data type and an application that is on the electronic device A and whose data changes. Then, the electronic device B may record the determined content by using a synchronous addressing array, to subsequently perform data pull synchronization with the electronic device A as required. For related content of the synchronous addressing array, refer to detailed descriptions in the following related embodiments. Details are not described herein.

Table 6

| Data type | d1 | d2 | d3 |
|---|---|---|---|
| Application 1 | 1 | | |
| Application 2 | | 0 | |
| Application 3 | 0 | | |

Table 7

| Data type | d1 | d2 | d3 |
|---|---|---|---|
| Application 1 | 1 | | |

In this way, an electronic device constructs an inter-device watermark indication matrix, and when determining that data is generated, the electronic device can indicate a data update status of the electronic device to another device by using the watermark indication matrix, to synchronize watermarks of data between different devices. In this way, a peer device can subsequently perform data synchronization as required based on a watermark status, to reduce power consumption caused by unnecessary device wake-up.

In some embodiments, the electronic device may send the updated watermark indication matrix to the peer device in a plurality of manners. For example, the electronic device sends watermark information to the peer device through link establishment or broadcasting, where the watermark information indicates a watermark update status included in the updated watermark indication matrix, to implement data watermark synchronization.

Optionally, after determining that the data is updated, the electronic device determines, based on the application-device mapping array shown in the foregoing Table 5, a device on which watermark information synchronization is to be performed. Then, the electronic device sends, to an electronic device on which a corresponding application is installed, the watermark information determined based on the updated watermark indication matrix, to reduce overheads in a communication process.

In some examples, the electronic device performs data watermark synchronization by using a watermark link establishment synchronization data packet after establishing a link with the determined device on which watermark information synchronization is to be performed.

For example, as shown in FIG. 5, the data packet includes an application identifier field and a data type field. The application identifier field indicates an identifier of an application in which a data update is generated. The data type field indicates a data type of updated data.

For example, in the example scenario corresponding to the foregoing Table 6, the electronic device A determines that the application whose data is updated is the application 1 and the data type is d1, and may generate a corresponding watermark link establishment synchronization data packet, add an identifier of the application 1 to an application identifier field in the data packet, and add an identifier corresponding to the data type d1 to a data type field. Then, the electronic device A may establish a link with the electronic device B, and send the data packet to the electronic device B through the link.

In some other examples, the electronic device performs data watermark synchronization with another device by broadcasting a watermark broadcast synchronization data packet.

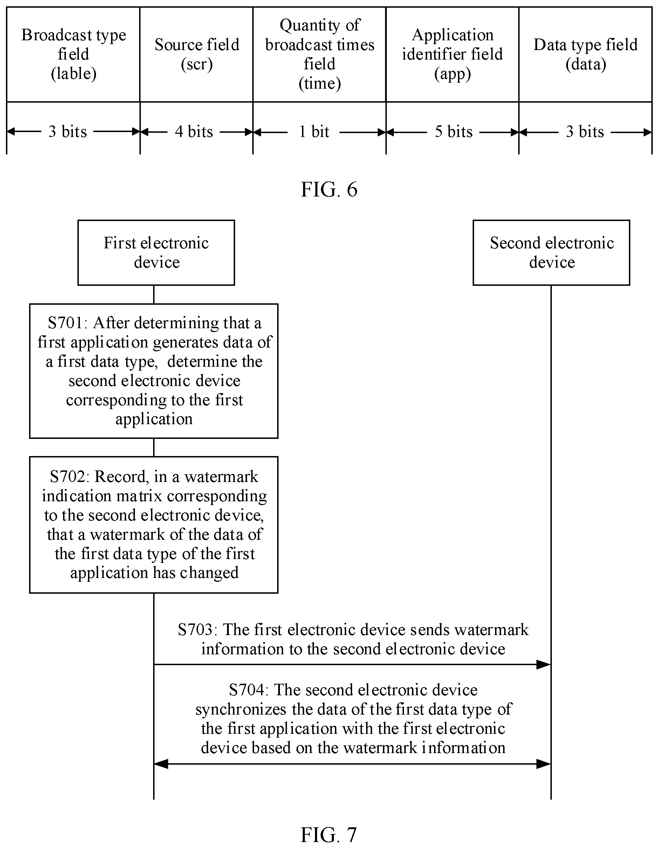

For example, as shown in FIG. 6, the data packet includes a broadcast type (lable) field, a source (scr) field, a quantity of broadcast times (time) field, an application identifier (app) field, and a data type (data) field. The broadcast type field occupies 3 bits (bits), and indicates a type code of the broadcast message. The source field occupies 4 bits, and indicates a device identifier (ID) of an electronic device that sends the broadcast message. The quantity of broadcast times field occupies 1 bit, and indicates whether the broadcast message is broadcast for the first time. The application identifier field occupies 5 bits, and indicates an identifier of an application in which a data update is generated. The data type field occupies 3 bits, and indicates a data type of updated data.

For example, in the example scenarios corresponding to the foregoing Table 6 and Table 7, the electronic device A determines that the application whose data is updated is the application 1 and the data type is d1, and may generate a corresponding watermark broadcast synchronization data packet. Then, the electronic device A sends the watermark broadcast synchronization data packet in a broadcast manner, and correspondingly, the electronic device B and the electronic device D may receive the watermark broadcast synchronization data packet. It should be understood that another device (for example, the electronic device C) in the communication system may also receive the watermark broadcast synchronization data packet. However, the another device may determine, based on content indicated by an application identifier field in the watermark broadcast synchronization data packet, that the another device has not installed a corresponding application. In this case, the another device may discard the watermark broadcast synchronization data packet.

In this way, the electronic device synchronizes watermarks of data, so that unnecessary data synchronization can be avoided. This reduces overheads.

The foregoing describes the processes of generating the watermark indication matrix and synchronizing the watermarks. The following describes in detail a data synchronization process after the electronic device obtains watermark information sent by the peer device.

In some embodiments, a synchronous addressing array is configured in the electronic device, and the synchronous addressing array indicates a data type corresponding to an application installed on the electronic device and whether a device that needs to perform data update exists in a distributed system.

Optionally, when a new distributed application is installed, the electronic device updates the synchronous addressing array, to create a row corresponding to the newly added application, so as to subsequently record a data update status of the newly added application in the distributed system.

For example, after completing distributed application installation, the electronic device $Dev_i$ constructs a synchronous addressing array $Addr_k = \{DevSet_k^j | j \in [1, m]\}$ for each distributed application $A_i^k$, where the synchronous addressing array includes m dimensions, and each dimension corresponds to a data type $d_p$ having a data synchronization requirement. Optionally, each $DevSet_k^j$ device list is empty during initialization.

For example, in the scenario shown in FIG. 3, corresponding to the foregoing Table 1, the electronic device A includes the application 1, the application 2, and the application 3. In this case, in an initialization process, the electronic device A creates a synchronous addressing array 1 that corresponds to the application 1 and that is shown in the following Table 8, a synchronous addressing array 2 that corresponds to the application 2 and that is shown in the following Table 9, and a synchronous addressing array 3 that corresponds to the application 3 and that is shown in the following Table 10. In the three synchronous addressing arrays, a value of each location is set to empty. Subsequently, if the electronic device A downloads a new application, the electronic device A may create a synchronous addressing array corresponding to the new application.

Table 8

| Application 1 | d1 | d2 | d3 | ... |
|---|---|---|---|---|
| | | | | ... |

Table 9

| Application 2 | d1 | d2 | d3 | ... |
|---|---|---|---|---|
| | | | | ... |

Table 10

| Application 3 | d1 | d2 | d3 | ... |
|---|---|---|---|---|
| | | | | ... |

In some examples, after receiving watermark information sent by another device, the electronic device may correspondingly update a synchronous addressing array based on the watermark information.

For example, after receiving watermark information sent by the peer device $Dev_j$, the electronic device $Dev_i$ determines, based on the watermark information, that a watermark of data of a data type $d_p$ of the distributed application $A_i^k$ is updated. In this case, the electronic device $Dev_i$ may add an identifier of the device $Dev_j$ to a device list corresponding to a data type $d_p$ in a synchronous addressing array $Addr_k$ corresponding to the application $A_i^k$, for example, $DevSet_k^{d_p} = \{DevSet_k^{d_p}, Dev_j\}$.

For example, in the scenario shown in FIG. 3, the electronic device A receives a watermark broadcast synchronization data packet sent by the electronic device B, obtains watermark information included in the watermark broadcast synchronization data packet, and determines that the electronic device B updates data whose data type is d1 in the application 1. In this case, the electronic device A may obtain the synchronous addressing array 1 that corresponds to the application 1 and that is shown in the foregoing Table 8. Then, as shown in the following Table 11, the electronic device A adds a device identifier of the electronic device B to a column corresponding to a data type d1 in the synchronous addressing array 1.

For another example, in the scenario shown in FIG. 3, the electronic device A further receives a watermark broadcast synchronization data packet sent by the electronic device C, obtains watermark information included in the watermark broadcast synchronization data packet, and determines that the electronic device C updates data whose data type is d1 in the application 2. In this case, the electronic device A may obtain the synchronous addressing array 2 that corresponds to the application 2 and that is shown in the foregoing Table 9. Then, as shown in the following Table 12, the electronic device A adds a device identifier of the electronic device C to a column corresponding to a data type d1 in the synchronous addressing array 2.

For another example, in the scenario shown in FIG. 3, the electronic device A further receives a watermark broadcast synchronization data packet sent by the electronic device D, obtains watermark information included in the watermark broadcast synchronization data packet, and determines that the electronic device D updates data whose data type is d1 in the application 1. In this case, the electronic device A may obtain an updated synchronous addressing array 1 that corresponds to the application 1 and that is shown in the following Table 11. Then, as shown in the following Table 13, the electronic device A adds a device identifier of the electronic device D to a column corresponding to a data type d1 in the updated synchronous addressing array 1. In a same column that is in the synchronous addressing array and that corresponds to a same data type, a device identifier of an electronic device whose data is updated earlier is recorded earlier, and a device identifier of an electronic device whose data is updated later is recorded later.

Table 11

| Application 1 | d1 | d2 | d3 | ... |
|---|---|---|---|---|
| | Electronic device B | | | ... |

Table 12

| Application 2 | d1 | d2 | d3 | ... |
|---|---|---|---|---|
| | | Electronic device C | | ... |

Table 13

| Application 1 | d1 | d2 | d3 | ... |
|---|---|---|---|---|
| | Electronic device B | | | ... |
| | Electronic device D | | | ... |

In some embodiments, when determining that data needs to be invoked, the electronic device may determine, based on a synchronous addressing array, whether data update exists in the to-be-invoked data. If the data update exists, the electronic device may determine, based on the synchronous addressing array, a device in which data that needs to be synchronized is located, to trigger data synchronization, so as to implement on-demand precise data synchronization.

For example, when determining that the application $A_i^k$ consumes some data types $d_p$ locally, the electronic device $Dev_i$ queries the device list $DevSet_k^{d_p}$ recorded based on the data type $d_p$ in the locally stored synchronous addressing array $Addr_k$ corresponding to the application $A_i^k$. Then, the electronic device $Dev_i$ synchronously pulls data based on the device identifier recorded in the device list $DevSet_k^{d_p}$.

For example, as shown in FIG. 4, after the electronic device $Dev_i$ receives watermark information sent by another device (for example, the electronic device $Dev_j$), middleware may obtain watermark update information of the another device. If the middleware determines that the watermark of data of the data type $d_p$ of the distributed application $A_i^k$ is updated, the middleware may update a corresponding synchronous addressing array. Then, the electronic device $Dev_i$ determines to start an application in the distributed application pool, and may determine, through the middleware, whether a watermark update exists in another device. When the watermark update exists in the another device, the electronic device may send a data synchronization request to the corresponding device $Dev_j$ based on the synchronous addressing array, to update corresponding distributed data in a database. Therefore, after the electronic device $Dev_i$ starts the application, the application can invoke updated distributed data from the database.

Optionally, after determining, based on the synchronous addressing array, a list of a device that needs to perform data synchronization, and completing data synchronization based on the list of the device, the electronic device may remove, from the synchronous addressing array, an identifier of a device that has completed data synchronization, to avoid interference to subsequent data synchronization.

For example, in the scenario shown in FIG. 3, the electronic device A detects an operation that the user indicates to start the application 2, and may obtain the synchronous addressing array 2 that corresponds to the application 2 and that is shown in the foregoing Table 12. Then, the electronic device A determines, based on the synchronous addressing array 2, that data of a data type d2 of the application 2 on the electronic device C is updated in the communication system in which the electronic device A is located. In this case, the electronic device A may send a data synchronization request to the electronic device C, to pull the data of the data type d2 of the application 2, so as to implement data synchronization. Then, the electronic device A may remove the device identifier included in the column in which the data type d2 is located in the foregoing Table 12, for example, obtain the blank synchronous addressing array 2 shown in the foregoing Table 9.

For another example, in the scenario shown in FIG. 3, the electronic device A detects an operation that the user indicates to start the application 1, and may obtain the synchronous addressing array 1 that corresponds to the application 1 and that is shown in the foregoing Table 13. Then, the electronic device A obtains a device list based on the synchronous addressing array 1, and determines that data of a data type d1 of the application 1 in the electronic device B and the electronic device D is updated in the communication system in which the electronic device A is located. In this case, the electronic device A may separately send a data synchronization request to the electronic device B and the electronic device D, to pull the data of the data type d1 of the application 1, to implement data synchronization. Then, the electronic device A may remove the device identifier included in the column in which the data type d1 is located in the foregoing Table 13, for example, obtain the blank synchronous addressing array 1 shown in the foregoing Table 8.

In this way, an electronic device updates a synchronous addressing array based on watermark information sent by each device, to synchronize data watermarks. Subsequently, the electronic device may locate, based on the synchronous addressing array, a device that needs to perform data synchronization as required, to effectively reduce redundant wake-up. This reduces power consumption overheads generated in a data synchronization process, prolongs working time of the device, and can reduce communication pressure of each device node in a distributed data synchronization scenario.

In addition, data synchronization based on the synchronous addressing array can indicate the data synchronization process to a determined device, service, and database, to pull data as required. For example, to-be-synchronized data is data of a data type d1 of the application 1 in the electronic device B, or to-be-synchronized data is data of a data type d1 of the application 1 in a database 1 in the electronic device D.

For example, FIG. 7 is a schematic flowchart of a data synchronization method according to an embodiment of this application. As shown in FIG. 7, the method includes the following steps.

S701: After determining that a first application generates data of a first data type, a first electronic device determines a second electronic device corresponding to the first application.

The first application is installed on the second electronic device.

In some embodiments, after accessing a communication system, the first electronic device determines, by interacting with another electronic device in the communication system, an application intersection set with the another electronic device, to establish watermark indication matrices corresponding to different electronic devices, to indicate watermark change statuses of data of different data types.

In some examples, the first electronic device sends a first application list to the second electronic device, where the first application list indicates application installation of the first electronic device. In addition, the first electronic device receives a second application list sent by the second electronic device, where the second application list indicates application installation of the second electronic device. Then, the first electronic device determines, based on the second application list, a target application installed on both the first electronic device and the second electronic device, where the target application includes the first application. The first electronic device establishes a watermark indication matrix corresponding to the second electronic device, where the watermark indication matrix indicates a watermark change status of data of the target application.

For example, as shown in FIG. 3, an electronic device A accesses a communication system, and the communication system already includes an electronic device B, an electronic device C, and an electronic device D. Installation statuses of applications on the electronic devices are shown in the foregoing Table 1. In this case, when accessing the communication system, the electronic device A may separately send a broadcast message to the electronic device B, the electronic device C, and the electronic device D. The broadcast message carries an application list of the electronic device A, to indicate that applications such as an application 1, an application 2, and an application 3 are installed on the electronic device A. In addition, when determining that a new device accesses the communication system, another electronic device in the communication system may send a broadcast message to the electronic device newly accessing the communication system, to notify the newly accessing electronic device of an application installed on the another electronic device. For example, the electronic device A may receive a broadcast message sent by another electronic device, and obtain application installation of the another electronic device. Based on this, an electronic device in the communication system may form a device pair with each of other electronic devices, and generate a watermark indication matrix corresponding to each device pair.

In some embodiments, after determining that the first application generates the data of the first data type, the first electronic device may determine that a state change status of the data of the first data type of the first application needs to be synchronized to another electronic device on which the first application is installed. Therefore, the first electronic device may determine the second electronic device on which the first application is also installed.

S702: The first electronic device records, in the watermark indication matrix corresponding to the second electronic device, that a watermark of the data of the first data type of the first application has changed.

The watermark indication matrix is used to record watermark change statuses of data of a plurality of data types.

In some embodiments, after determining the second electronic device, the first electronic device may obtain the watermark indication matrix corresponding to the second electronic device, to record, in the watermark indication matrix, that the watermark of the data of the first data type of the first application has changed.

For example, in the scenario shown in FIG. 3, in a process of displaying the application 1, the electronic device A generates new data in response to a user operation, where a data type of the data is d1. In this case, the electronic device A determines, based on the application-device mapping array shown in the foregoing Table 5, that a device list corresponding to the application 1 includes the electronic device B and the electronic device D. In this case, as shown in the foregoing Table 6, the electronic device A may set, in a watermark indication matrix corresponding to the electronic device A and the electronic device B shown in the foregoing Table 2, the location corresponding to the data type d1 in the row corresponding to the application 1 to 1. In addition, as shown in the foregoing Table 7, the electronic device A may set, in a watermark indication matrix corresponding to the electronic device A and the electronic device D shown in the foregoing Table 4, the location corresponding to the data type d1 in the row corresponding to the application 1 to 1.

In this way, the first electronic device records, by using the watermark indication matrix, an electronic device, an application, and a data type on which watermark synchronization is to be performed, so that a watermark difference between different electronic devices can be directly determined, to indicate subsequent on-demand data pull synchronization.

S703: The first electronic device sends watermark information to the second electronic device.

The watermark information indicates the second electronic device to perform data synchronization based on a watermark change status recorded in the watermark indication matrix.

In some embodiments, the first electronic device performs, based on the watermark indication matrix, data watermark synchronization with the second electronic device with a watermark difference. For example, the first electronic device sends the watermark information to the second electronic device, to indicate a watermark change status that is of the data of the first data type of the first application and that is indicated in the watermark indication matrix.

Optionally, the first electronic device may send the watermark information to the second electronic device through link establishment or broadcasting.

For example, the first electronic device establishes a first connection to a third electronic device in the second electronic device, and sends a data packet to the third electronic device through the first connection. The data packet includes an application identifier field and a data type field, the application identifier field indicates the first application, and the data type field indicates the first data type. For example, the first electronic device sends the data packet shown in FIG. 5 to the third electronic device through a connection to the third electronic device.

For another example, the first electronic device sends a broadcast packet to a fourth electronic device in the second electronic device, where the broadcast packet includes an application identifier field and a data type field, the application identifier field indicates the first application, and the data type field indicates the first data type. For example, the first electronic device sends the broadcast packet shown in FIG. 6 to the third electronic device.

In this way, the electronic device synchronizes watermarks of data as required in different manners, so that unnecessary data synchronization can be avoided. This reduces overheads.

In some embodiments, after sending the watermark information to the second electronic device, the first electronic device clears the watermark change status that is of the data of the first data type of the first application and that is recorded in the watermark indication matrix, to avoid an exception in a subsequent process in which the first electronic device performs watermark synchronization based on the watermark indication matrix.

Optionally, after determining that the second electronic device and the first electronic device have completed watermark synchronization of the data of the first data type of the first application, the first electronic device may clear the watermark change status that is of the data of the first data type of the first application and that is recorded in the watermark indication matrix.

For example, in the scenario shown in FIG. 3, corresponding to the foregoing Table 6, after sending watermark information to the electronic device B, the electronic device A sets the location corresponding to the data type d1 in the row corresponding to the application 1 in the foregoing Table 6 to 0. For example, if the electronic device A needs to update a watermark indication matrix shown in the foregoing Table 6 again, the electronic device A needs to first obtain the watermark indication matrix shown in the foregoing Table 2, and record a watermark change status based on the watermark indication matrix shown in the foregoing Table 2. That is, after performing data watermark synchronization, an electronic device sets a corresponding location in a corresponding watermark indication matrix between devices to 0, to indicate that watermarks of data corresponding to the location in the two devices are the same.

S704: The second electronic device synchronizes the data of the first data type of the first application with the first electronic device based on the watermark information.

In some embodiments, the second electronic device determines the first application and the first data type based on the watermark information. Then, the second electronic device obtains a synchronous addressing array corresponding to the first application, and records, in the synchronous addressing array, that the watermark of the data of the first data type of the first electronic device has changed, where the synchronous addressing array is used to record an electronic device in which a watermark of data of the first application has changed. Subsequently, when determining to consume the data of the first data type of the first application, the second electronic device synchronizes the data of the first data type of the first application with the first electronic device based on the synchronous addressing array.

In some embodiments, after completing watermark synchronization based on the received watermark information, the second electronic device may update the synchronous addressing array, where the electronic device that is recorded in an updated synchronous addressing array and in which the watermark of the data of the first data type has changed does not include the first electronic device.

For example, in the scenario shown in FIG. 3, corresponding to the foregoing Table 1, the electronic device A includes the application 1, the application 2, and the application 3. In this case, in an initialization process, the electronic device A creates a synchronous addressing array 1 that corresponds to the application 1 and that is shown in the foregoing Table 8, a synchronous addressing array 2 that corresponds to the application 2 and that is shown in the foregoing Table 9, and a synchronous addressing array 3 that corresponds to the application 3 and that is shown in the foregoing Table 10. Then, the electronic device A receives a watermark broadcast synchronization data packet sent by the electronic device B, obtains watermark information included in the watermark broadcast synchronization data packet, and determines that the electronic device B updates the data whose data type is d1 in the application 1. In this case, the electronic device A may obtain the synchronous addressing array 1 that corresponds to the application 1 and that is shown in the foregoing Table 8. Then, as shown in the foregoing Table 11, the electronic device A adds a device identifier of the electronic device B to a column corresponding to a data type d1 in the synchronous addressing array 1. Then, the electronic device A detects an operation that a user indicates to start the application 1, and may obtain the synchronous addressing array 1 that corresponds to the application 1 and that is shown in the foregoing Table 11. Then, the electronic device A obtains a device list based on the synchronous addressing array 1, and determines that the data of the data type d1 of the application 1 on the electronic device B is updated in the communication system in which the electronic device A is located. In this case, the electronic device A may send a data synchronization request to the electronic device B, to pull the data of the data type d1 of the application 1, so as to implement data synchronization. Then, the electronic device A may remove the device identifier included in the column in which the data type d1 is located in the foregoing Table 11, for example, obtain a blank synchronous addressing array 1 shown in the foregoing Table 8.

In this way, an electronic device constructs an inter-device watermark indication matrix, and when determining that data is generated, the electronic device can indicate a data update status of the electronic device to another device by using the watermark indication matrix, to synchronize watermarks of data between different devices. In this way, a peer device can subsequently perform data synchronization as required based on a watermark status, to reduce power consumption caused by unnecessary device wake-up.

In addition, the electronic device updates the synchronous addressing array based on watermark information sent by each device, to synchronize data watermarks. Subsequently, the electronic device may locate, based on the synchronous addressing array, a device that needs to perform data synchronization as required, to effectively reduce redundant wake-up. This reduces power consumption overheads generated in a data synchronization process, prolongs working time of the device, and can reduce communication pressure of each device node in a distributed data synchronization scenario.

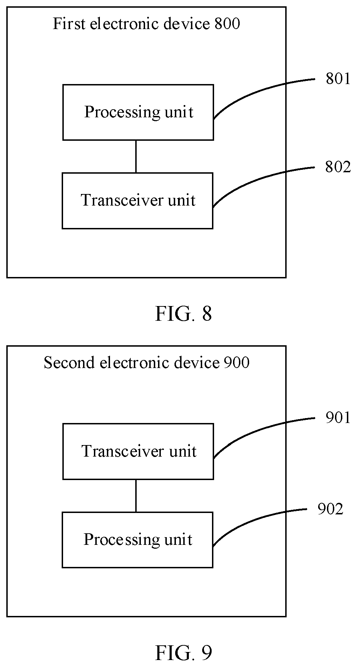

The foregoing describes in detail the data synchronization method provided in embodiments of this application with reference to FIG. 3 to FIG. 7. The following describes in detail the first electronic device and the second electronic device provided in embodiments of this application with reference to FIG. 8 and FIG. 9.

In a possible design, FIG. 8 is a diagram of a structure of a first electronic device according to an embodiment of this application. As shown in FIG. 8, the first electronic device 800 may include a processing unit 801 and a transceiver unit 802. The first electronic device 800 may be configured to implement functions of the first electronic device in the foregoing method embodiments.

Optionally, the processing unit 801 is configured to support the first electronic device 800 in performing S701 and S702 in FIG. 7.

Optionally, the transceiver unit 802 is configured to support the first electronic device 800 in performing S703 and S704 in FIG. 7.

The transceiver unit may include a receiving unit and a sending unit, may be implemented by a transceiver or a transceiver-related circuit component, and may be a transceiver or a transceiver module. Operations and/or functions of the units in the first electronic device 800 are separately used to implement corresponding procedures of the data synchronization method in the foregoing method embodiments. All related content of the steps in the foregoing method embodiments may be cited in function descriptions of corresponding functional units. For brevity, details are not described herein again.

Optionally, the first electronic device 800 shown in FIG. 8 may further include a storage unit (not shown in FIG. 8), and the storage unit stores a program or instructions. When the processing unit 801 and the transceiver unit 802 execute the program or the instructions, the first electronic device 800 shown in FIG. 8 is enabled to perform the data synchronization method in the foregoing method embodiments.

For technical effect of the first electronic device 800 shown in FIG. 8, refer to the technical effect of the data synchronization method in the foregoing method embodiments. Details are not described herein again.

In addition to being in a form of the first electronic device 800, the technical solution provided in this application may alternatively be a functional unit or a chip in the first electronic device, or an apparatus that matches the first electronic device for use.

In a possible design, FIG. 9 is a diagram of a structure of a second electronic device according to an embodiment of this application. As shown in FIG. 9, the second electronic device 900 may include a transceiver unit 901 and a processing unit 902. The second electronic device 900 may be configured to implement functions of the second electronic device in the foregoing method embodiments.

Optionally, the transceiver unit 901 is configured to support the second electronic device 900 in performing S703 and S704 in FIG. 7.

Optionally, the processing unit 902 is configured to support the second electronic device 900 in performing S704 in FIG. 7.

The transceiver unit may include a receiving unit and a sending unit, may be implemented by a transceiver or a transceiver-related circuit component, and may be a transceiver or a transceiver module. Operations and/or functions of the units in the second electronic device 900 are separately used to implement corresponding procedures of the data synchronization method in the foregoing method embodiments. All related content of the steps in the foregoing method embodiments may be cited in function descriptions of corresponding functional units. For brevity, details are not described herein again.

Optionally, the second electronic device 900 shown in FIG. 9 may further include a storage unit (not shown in FIG. 9), and the storage unit stores a program or instructions. When the transceiver unit 901 and the processing unit 902 execute the program or the instructions, the second electronic device 900 shown in FIG. 9 is enabled to perform the data synchronization method in the foregoing method embodiments.

For technical effect of the second electronic device 900 shown in FIG. 9, refer to the technical effect of the data synchronization method in the foregoing method embodiments. Details are not described herein again.

In addition to being in a form of the second electronic device 900, the technical solution provided in this application may alternatively be a functional unit or a chip in the second electronic device, or an apparatus that matches the second electronic device for use.

An embodiment of this application further provides a chip system, including a processor. The processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory memory, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the data synchronization method in the foregoing embodiments.

An embodiment of this application further provides a computer program product. When the computer program product runs on a computer, the computer is enabled to perform the foregoing related steps, to implement the data synchronization method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the data synchronization method in the foregoing method embodiments.

The apparatus, the computer-readable storage medium, the computer program product, or the chip provided in embodiments of this application is configured to perform the corresponding method provided above. Therefore, for beneficial effect that can be achieved, refer to the beneficial effect in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division into the foregoing functional modules is merely used as an example for description. During actual application, the foregoing functions can be allocated to different functional modules for accomplishment based on a requirement. That is, an internal structure of the apparatus is divided into different functional modules to accomplish all or some of the functions described above. For a detailed working process of the foregoing system, apparatus, and unit, refer to a corresponding process in the foregoing method embodiments. Details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A data synchronization system, wherein the system comprises a first electronic device and a second electronic device, wherein
   the first electronic device is configured to:

   determine, after a first application on the first electronic device generates data of a first data type, the second electronic device corresponding to the first application, wherein the first application is installed on the second electronic device;
   record, in a watermark indication matrix corresponding to the second electronic device, that a watermark of the data of the first data type of the first application has changed, wherein the watermark indication matrix is used to record watermark change statuses of data of a plurality of data types; and
   send watermark information to the second electronic device, wherein the watermark information indicates a watermark change status recorded in the watermark indication matrix; and
   the second electronic device is configured to:

   receive the watermark information; and
   synchronize the data of the first data type of the first application with the first electronic device based on the watermark information.

2. The system according to claim 1, wherein
   the first electronic device is further configured to:

   send a first application list to the second electronic device, wherein the first application list indicates application installation of the first electronic device; and
   the second electronic device is further configured to:
   send a second application list to the first electronic device, wherein the second application list indicates application installation of the second electronic device.

3. The system according to claim 2, wherein
the first electronic device is further configured to:

    determine, based on the second application list, a target application installed on both the first electronic device and the second electronic device, wherein the target application comprises the first application; and
    establish the watermark indication matrix corresponding to the second electronic device, wherein the watermark indication matrix indicates a watermark change status of data of the target application.

4. The system according to any one of claims 1 to 3, wherein
the first electronic device is further configured to:
clear a watermark change status that is of the data of the first data type of the first application and that is recorded in the watermark indication matrix.

5. The system according to any one of claims 1 to 4, wherein
the second electronic device is further configured to:

    determine the first application and the first data type based on the watermark information;
    obtain a synchronous addressing array corresponding to the first application, and record, in the synchronous addressing array, that the watermark of the data of the first data type of the first electronic device has changed, wherein the synchronous addressing array is used to record an electronic device in which a watermark of data of the first application has changed; and
    when determining to consume the data of the first data type of the first application, synchronize the data of the first data type of the first application with the first electronic device based on the synchronous addressing array.

6. The system according to claim 5, wherein
the second electronic device is further configured to update the synchronous addressing array, wherein the electronic device that is recorded in an updated synchronous addressing array and in which the watermark of the data of the first data type has changed does not comprise the first electronic device.

7. A data synchronization method, applied to a first electronic device, wherein the method comprises:

    determining, after determining that a first application generates data of a first data type, a second electronic device corresponding to the first application, wherein the first application is installed on the second electronic device;
    recording, in a watermark indication matrix corresponding to the second electronic device, that a watermark of the data of the first data type of the first application has changed, wherein the watermark indication matrix is used to record watermark change statuses of data of a plurality of data types; and
    sending watermark information to the second electronic device, wherein the watermark information indicates the second electronic device to perform data synchronization based on a watermark change status recorded in the watermark indication matrix.

8. The method according to claim 7, wherein before the determining, after determining that a first application generates data of a first data type, a second electronic device corresponding to the first application, the method further comprises:

    sending a first application list to the second electronic device, wherein the first application list indicates application installation of the first electronic device; and
    receiving a second application list sent by the second electronic device, wherein the second application list indicates application installation of the second electronic device.

9. The method according to claim 8, wherein the method further comprises:

    determining, based on the second application list, a target application installed on both the first electronic device and the second electronic device, wherein the target application comprises the first application; and
    establishing the watermark indication matrix corresponding to the second electronic device, wherein the watermark indication matrix indicates a watermark change status of data of the target application.

10. The method according to any one of claims 7 to 9, wherein after the sending watermark information to the second electronic device, the method further comprises:

clearing a watermark change status that is of the data of the first data type of the first application and that is recorded in the watermark indication matrix.

11. The method according to any one of claims 7 to 10, wherein the sending watermark information to the second electronic device comprises:
    establishing a first connection to a third electronic device in the second electronic device, and sending a data packet to the third electronic device through the first connection, wherein the data packet comprises an application identifier field and a data type field, the application identifier field indicates the first application, and the data type field indicates the first data type.

12. The method according to any one of claims 7 to 10, wherein the sending watermark information to the second electronic device comprises:
    sending a broadcast packet to a fourth electronic device in the second electronic device, wherein the broadcast packet comprises an application identifier field and a data type field, the application identifier field indicates the first application, and the data type field indicates the first data type.

13. A data synchronization method, applied to a second electronic device, wherein the method comprises:

    receiving watermark information sent by a first electronic device, wherein the watermark information indicates that a watermark of data of a first data type of a first application on the first electronic device has changed, and the first application is installed on the second electronic device;
    and
    synchronizing the data of the first data type of the first application with the first electronic device based on the watermark information.

14. The method according to claim 13, wherein the synchronizing the data of the first data type of the first application with the first electronic device based on the watermark information comprises:

    determining the first application and the first data type based on the watermark information;
    obtaining a synchronous addressing array corresponding to the first application, and recording, in the synchronous addressing array, that the watermark of the data of the first data type of the first electronic device has changed, wherein the synchronous addressing array is used to record an electronic device in which a watermark of data of the first application has changed; and
    when determining to consume the data of the first data type of the first application, synchronizing the data of the first data type of the first application with the first electronic device based on the synchronous addressing array.

15. The method according to claim 14, wherein the method further comprises:
    updating the synchronous addressing array, wherein the electronic device that is recorded in an updated synchronous addressing array and in which the watermark of the data of the first data type has changed does not comprise the first electronic device.

16. The method according to any one of claims 13 to 15, wherein before the receiving watermark information sent by a first electronic device, the method further comprises:

    sending a second application list to the first electronic device, wherein the second application list indicates application installation of the second electronic device; and
    receiving a first application list sent by the first electronic device, wherein the first application list indicates application installation of the first electronic device.

17. The method according to any one of claims 13 to 16, wherein before the receiving first watermark information sent by a first electronic device, the method further comprises:

    establishing a first connection to the first electronic device; and
    the receiving watermark information sent by a first electronic device comprises:
    receiving, through the first connection, a data packet sent by the first electronic device, wherein the data packet comprises an application identifier field and a data type field, the application identifier field indicates the first application, and the data type field indicates the first data type.

18. The method according to any one of claims 13 to 16, wherein the receiving watermark information sent by a first electronic device comprises:
receiving a broadcast packet sent by the first electronic device, wherein the broadcast packet comprises an application identifier field and a data type field, the application identifier field indicates the first application, and the data type field indicates the first data type.

19. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 7 to 12.

20. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 13 to 18.

21. A computer-readable storage medium, wherein the computer-readable storage medium comprises a computer program, and when the computer program is run on an electronic device, the electronic device is enabled to perform the method according to any one of claims 7 to 12, or the electronic device is enabled to perform the method according to any one of claims 13 to 18.

22. A computer program product, wherein when the computer program product runs on a computer, the computer is enabled to perform the method according to any one of claims 7 to 12, or the computer is enabled to perform the method according to any one of claims 13 to 18.

FIG. 1

Antenna 1

Antenna 2

| Mobile communication module 2G/3G/4G/5G [150] | Processor [110] | Wireless communication module BT/WLAN/GNSS/NFC/IR/FM [160] |

Audio module [170]

Displays 1 to N [194]

Cameras 1 to N [193]

Indicator [192]

Motor [191]

Sensor module [180]

Button [190]

Memory [121]

SIM card interfaces 1 to N [195]

External memory interface [120]

USB interface [130]

Charging input

Charging management module [140]

Power management module [141]

Battery [142]

FIG. 2-1

| Application layer | Calendar | Contact | Notes | Sports and health | Clipboard |
| | Gallery | Maps | Camera | Videos | ... |

| Application framework layer | Window manager | Content provider | Phone manager | Resource manager |
| | Notification manager | View system | ... | |

| System library | Surface manager | Three-dimensional graphics processing library | Android runtime |
| | Two-dimensional graphics engine | Media library | ... |

| Kernel layer | Display driver | Camera driver |
| | Audio driver | Sensor driver | ... |

FIG. 2-2

Electronic
device B

Electronic
device A

Electronic
device C

Electronic
device D

FIG. 3

Data generation
watermark push
process

Data pull
synchronization
process

Electronic device Dev_i

Distributed
application pool

Data
generation | Distributed
data update

Database

Data
generation | Distributed
data update

Middleware

Transmission
scheduling | Watermark
update

Communication
module

Electronic device Dev_j

Distributed
application pool

Data
generation | Distributed
data update

Database

Data
generation | Distributed
data update

Middleware

Transmission
scheduling | Watermark
update

Communication
module

Data/
Watermark

FIG. 4

| Data packet (packet) | |
|---|---|
| Application identifier field | Data type field |

FIG. 5

| Broadcast type field (lable) | Source field (scr) | Quantity of broadcast times field (time) | Application identifier field (app) | Data type field (data) |
|---|---|---|---|---|
| ←— 3 bits —→ | ←— 4 bits —→ | ←— 1 bit —→ | ←— 5 bits —→ | ←— 3 bits —→ |

FIG. 6

```
┌──────────────┐                                    ┌──────────────┐
│    First     │                                    │    Second    │
│  electronic  │                                    │  electronic  │
│    device    │                                    │    device    │
└──────┬───────┘                                    └──────┬───────┘
       │                                                   │
┌──────┴──────────────┐                                    │
│ S701: After         │                                    │
│ determining that a  │                                    │
│ first application   │                                    │
│ generates data of   │                                    │
│ a first data type,  │                                    │
│ determine the       │                                    │
│ second electronic   │                                    │
│ device              │                                    │
│ corresponding to    │                                    │
│ the first           │                                    │
│ application         │                                    │
└──────┬──────────────┘                                    │
┌──────┴──────────────┐                                    │
│ S702: Record, in a  │                                    │
│ watermark           │                                    │
│ indication matrix   │                                    │
│ corresponding       │                                    │
│ to the second       │                                    │
│ electronic device,  │                                    │
│ that a watermark    │                                    │
│ of the data of      │                                    │
│ the first data type │                                    │
│ of the first        │                                    │
│ application has     │                                    │
│ changed             │                                    │
└──────┬──────────────┘                                    │
       │                                                   │
       │ S703: The first electronic device sends watermark │
       │    information to the second electronic device    │
       ├──────────────────────────────────────────────────►│
       │                                                   │
       │ S704: The second electronic device                │
       │ synchronizes the data of the first data type of   │
       │ the first application with the first electronic    │
       │ device based on the watermark information          │
       │◄─────────────────────────────────────────────────►│
       │                                                   │
```

FIG. 7

First electronic device 800

Processing unit ──── 801

Transceiver unit ──── 802

FIG. 8

Second electronic device 900

Transceiver unit ──── 901

Processing unit ──── 902

FIG. 9

## INTERNATIONAL SEARCH REPORT

| | International application No. |
|---|---|
| | **PCT/CN2024/072619** |

**A. CLASSIFICATION OF SUBJECT MATTER**

H04L67/1095(2022.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXT, DWPI, CNKI: 数据, 信息, 同步, 应用, 类型, 矩阵, 指示, 水位, 变化, 变动, 变更, 记录, 列表, data, information, synchronization, APP, application, type, matrix, indicator, indication, water level, water line, change, record, list

**C. DOCUMENTS CONSIDERED TO BE RELEVANT**

| Category* | Citation of document, with indication, where appropriate, of the relevant passages | Relevant to claim No. |
|---|---|---|
| X | US 2023058148 A1 (HUAWEI TECHNOLOGIES CO., LTD.) 23 February 2023 (2023-02-23) description, paragraphs [0050]-[0139], and figures 1-13 | 1-22 |
| A | WO 2022143081 A1 (HUAWEI TECHNOLOGIES CO., LTD.) 07 July 2022 (2022-07-07) entire document | 1-22 |
| A | CN 114095511 A (HUAWEI TECHNOLOGIES CO., LTD.) 25 February 2022 (2022-02-25) entire document | 1-22 |
| A | CN 115225649 A (VIVO COMMUNICATION TECHNOLOGY CO., LTD.) 21 October 2022 (2022-10-21) entire document | 1-22 |
| A | CN 115580541 A (HONOR TERMINAL CO., LTD.) 06 January 2023 (2023-01-06) entire document | 1-22 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 March 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/072619** |

**C.    DOCUMENTS CONSIDERED TO BE RELEVANT**

| Category* | Citation of document, with indication, where appropriate, of the relevant passages | Relevant to claim No. |
| --- | --- | --- |
| A | 周千明等 (ZHOU, Qianming et al.). "基于Dotmim.Sync框架的Android移动数据同步方法及应用 (Android Mobile Data Synchronization Method and Application Based on Dotmim.Sync Framework)"<br>计算机与数字工程 (Computer & Digital Engineering), 20 April 2020 (2020-04-20),<br>    entire document | 1-22 |

Form PCT/ISA/210 (second sheet) (July 2022)

**INTERNATIONAL SEARCH REPORT**
Information on patent family members

International application No.

**PCT/CN2024/072619**

| Patent document cited in search report | | | Publication date (day/month/year) | Patent family member(s) | | | Publication date (day/month/year) |
|---|---|---|---|---|---|---|---|
| US | 2023058148 | A1 | 23 February 2023 | WO | 2021055016 | A1 | 25 March 2021 |
| WO | 2022143081 | A1 | 07 July 2022 | CN | 114691631 | A | 01 July 2022 |
| CN | 114095511 | A | 25 February 2022 | WO | 2022022546 | A1 | 03 February 2022 |
| CN | 115225649 | A | 21 October 2022 | None | | | |
| CN | 115580541 | A | 06 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310455593X